Europäisches Patentamt

European Patent Office

Office européen des brevets

(11) Numéro de publication : **0 461 057 A1**

# (12) DEMANDE DE BREVET EUROPEEN

(21) Numéro de dépôt : 91470011.7

(22) Date de dépôt : 03.06.91

(51) Int. Cl.⁵ : **G01F 1/50, G01F 1/36, G01F 25/00**

(30) Priorité : 06.06.90 FR 9007206

(43) Date de publication de la demande :
**11.12.91 Bulletin 91/50**

(84) Etats contractants désignés :
**BE CH DE GB IT LI NL**

(71) Demandeur : **COMAP**
**46, rue de l'Industrie**
**F-45550 Saint Denis de l'Hôtel (FR)**

(72) Inventeur : **Heidinger, Bruno**
**18 Pré Hayer**
**F-54700 Pont-à-Mousson (FR)**
Inventeur : **Anceaux, Dominique**
**9, rue des Maraîchers**
**F-54140 Jarville la Malgrange (FR)**
Inventeur : **Beltz, Jacques**
**3, Clos des Prémontrés**
**F-54700 Blenod les Pont-à-Mousson (FR)**
Inventeur : **Schneider, André**
**21, allée Pierre Lallement, Pré Latour**
**F-54700 Pont-à-Mousson (FR)**

(74) Mandataire : **Puit, Thierry et al**
**Centre de Recherches de Pont-à-Mousson**
**Service de Propriété Industrielle Boîte Postale**
**109**
**F-54704 Pont-à-Mousson Cédex (FR)**

(54) **Procédé pour la mesure en vue du réglage du débit de conduites transportant un fluide de régulation thermique, et dispositif de mise en oeuvre du procédé.**

(57)    Mesure du débit de fluide de régulation thermique, réalisée au moyen d'un circuit transformant la pression en tension électrique proportionnelle au débit, transformant ladite tension électrique proportionnelle au débit en temps proportionnel à la tension électrique donc proportionnelle au débit et affichant un nombre correspondant au temps et au débit.

Le circuit comporte un dispositif de réglage du débit (5) comprenant au moins deux prises de pression (14) connectées chacune à au moins un transducteur (41, 42) connecté à un étage d'entrée (3) lui-même connecté à un convertisseur analogique numérique (4), un clavier de commande (6), un afficheur (10) permettant d'afficher successivement le débit puis le réglage à effectuer, une mémoire (11) et un microcontrôleur (9) comprenant une autre mémoire permettant de gérer toutes les acquisitions et au moins une alimentation électrique (10).

Application au réglage du débit dans des conduites transportant un fluide de régulation thermique, notamment des colonnes d'eau de chauffage central.

EP 0 461 057 A1

Fig. 1

La présente invention se rapporte à un procédé pour la mesure en vue du réglage du débit d'un fluide de régulation thermique transporté dans des conduites.

L'invention se rapporte également aux moyens pour la mise en oeuvre de ce procédé.

Plus particulièrement mais non limitativement, l'invention concerne un procédé de mesure en vue du réglage ou de la régulation du débit d'eau chaude circulant dans une conduite d'alimentation en fluide chaud entre le générateur et les radiateurs d'une installation de chauffage central qui comprend également une vanne permettant la régulation ou le réglage.

Dans ce domaine, il est connu d'employer des dispositifs de régulation thermique ou des vannes permettant l'équilibrage de la distribution de chaleur entre les différentes entrées d'un ensemble immobilier en utilisant les vannes mentionnées ci-dessus formant des organes déprimogènes, ce qui permet de mesurer le débit par une mesure du différentiel de pression. (voir par exemple le brevet publié sous le n° 2 211 108 et le modèle d'utilité de la demanderesse déposé en R.F.A. sous le n° G 90 05 040.1.).

Cette solution a donné satisfaction, mais son emploi n'est basé que sur des calculs théoriques. Ceci impose que l'installation pratique doit être strictement conforme à l'installation théorique, ce qui n'est jamais le cas dans la réalité. On a aussi constaté dans des installations existantes, des débits effectifs dans des colonnes d'eau de 200 % du débit théorique nécessaire parce que des installateurs ne savent pas faire les mesures.

La présente invention vise à remédier à ces inconvénients et à apporter divers avantages consistant essentiellement en un procédé simple de mise en oeuvre qui permet d'obtenir une mesure effective du débit.

Un autre but de l'invention est de proposer des moyens économiques et éprouvés de mise en oeuvre du procédé.

A cet effet le procédé pour la mesure en vue du réglage du débit de conduites transportant un fluide de régulation thermique, tel que défini ci-dessus, se caractérise en ce qu'il est réalisé au moyen d'un circuit comprenant au moins un dispositif de réglage du débit comportant au moins deux prises de pression connectées chacune à au moins un transducteur connecté à un étage d'entrée lui même connecté à un convertisseur analogique numérique, et en ce que ce procédé comporte les étapes suivantes :

– une compensation des dérives des étages d'entrée,

– un étalonnage du convertisseur analogique numérique,

– une mesure des décalages à l'origine provoqués par les capteurs connectés aux prises de pression, et

– une mesure de la différence de pression.

En vue, d'un gain de temps pendant la mise en oeuvre du procédé, sont imbriquées les trois étapes suivantes :

– compensation des dérives des étages d'entrée,

– étalonnage du convertisseur analogique numérique, et

– mesure des décalages à l'origine provoqués par les capteurs connectés aux prises de pression.

Dans une variante de réalisation avantageuse, pour ne pas utiliser de composant de précision, à l'exception d'une source de tensions et de résistances, amplificateur de différences, le procédé selon l'invention comprend une étape de compensation des dérives de l'étage d'entrée provoquée automatiquement par le programme contenu dans une mémoire au moment de la commande de la compensation des décalages à l'origine.

Afin de pallier les faibles performances intrinsèques des composants par des mesures de corrections et d'étalonnages automatiques, le circuit pour la mise en oeuvre du procédé selon l'invention comprend : un dispositif de réglage du débit, des capteurs, un étage d'entrée, un convertisseur, au moins un microcontrôleur, au moins un clavier de commande, et au moins un afficheur permettant d'afficher successivement le débit puis le réglage à effectuer, au moins une mémoire permettant de gérer toutes les acquisitions et au moins une alimentation électrique.

Le microcontrôleur permet, par le biais d'une programmation appropriée de la mémoire, de corriger la tension de décalage d'entrée des amplificateurs opérationnels et de leurs dérives et, de ré-étalonner à chaque mesure la chaîne de conversion analogique numérique des mesures formée par la combinaison de l'étage d'entrée et du convertisseur.

Le circuit comporte des commutateurs analogiques commandés par le microcontrôleur.

En vue d'utiliser une technologie éprouvée et de faible coût, le dispositif de mesure du débit comporte un circuit dont la partie électronique est constituée de composants standards.

Afin d'utiliser des composants électroniques, le transducteur selon l'invention est un capteur transformant la mesure de pression en tensions électriques transmises auxdits composants électroniques.

De manière à pallier aux faibles performances des composants standards, la mémoire est programmée et apte à provoquer automatiquement l'étape d'étalonnage du convertisseur analogique numérique avant la mise en oeuvre de l'étape de mesure de pression au moment de la commande de cette dernière étape.

Dans le but d'équilibrer les entrées et d'obtenir quatre voies identiques, l'étage d'entrée comprend au moins quatre filtres d'entrée, au moins quatre résistances d'entrée identiques, au moins six amplificateurs et au moins deux résistances de contre-réaction.

L'étage d'entrée comporte trois commutateurs analogiques aptes à être actionnés simultanément.

Afin d'éviter un coût prohibitif, le dispositif pour le réglage du débit en vue de la mise en oeuvre du procédé selon l'invention, comprend au moins un clapet et un siège formant organe déprimogène. Ce dispositif étant une vanne d'équilibrage qui comprend au moins deux prises de pression, au moins un système de commande du clapet et au moins un indicateur de la position relative du clapet par rapport à son siège.

La vanne d'équilibrage comportant les prises de pression et l'indicateur de la position relative du clapet par rapport à son siège dans le même plan est caractérisée en ce que lesdites prises de pression reliées au circuit de mesure du débit sont situées respectivement en amont et en aval du dispositif de l'organe déprimogène.

L'indicateur de la position relative du clapet par rapport à son siège, du dispositif de réglage du débit est manuel.

Dans le but d'éviter les relevés de la position de la vanne et afin d'obtenir un mesureur de débit en continu, l'indicateur de la position relative du clapet par rapport à son siège est un répétiteur électronique.

La vanne d'équilibrage comprend un indicateur de la position relative du clapet par rapport à son siège et une commande du clapet formant un seul organe.

Lesdits indicateurs de la position relative du clapet par rapport à son siège et la commande du clapet constituent un volant de réglage manuel comprenant un mécanisme qui incrémente les dizaines qui sont affichées par le volant de réglage de manière à être visibles au-dessus et au dessous de ce dernier et les chiffres des unités étant affichés visibles au-dessus et au-dessous dudit volant de réglage.

Les deux prises de pression du robinet de pied de colonne pour la mise en oeuvre du procédé selon l'invention, sont de formes et de dimensions identiques.

Le circuit pour la mise en oeuvre du procédé selon l'invention comporte un dispositif de mesure de la température.

Le circuit pour la mise en oeuvre du procédé selon l'invention comporte un dispositif de relevé automatique de la position du clapet par rapport à son siège.

Les caractéristiques et avantages de l'invention ressortiront de la description qui va suivre, donnée à titre d'exemple non limitatif et en regard des figures annexées, sur lesquelles :

La figure 1 représente un circuit schématique d'un dispositif permettant la mise en oeuvre du procédé selon l'invention.

La figure 2 est une vue en coupe d'un robinet de pied de colonne à réglage manuel avec prises de pression permettant la mise en oeuvre de l'invention.

La figure 3 représente dans un schéma un dispositif permettant la compensation des décalages à l'origine pour les capteurs.

La figure 4 représente l'étage d'entrée du dispositif représenté à la figure 1.

La figure 5 représente une variante d'exécution d'un étage d'entrée permettant la mise en oeuvre du procédé selon l'invention.

La figure 6 est un schéma d'un convertisseur analogique-numérique du dispositif représenté à la figure 1.

La figure 7 représente schématiquement un exemple de réalisation de générateur du convertisseur représenté à la figure 6.

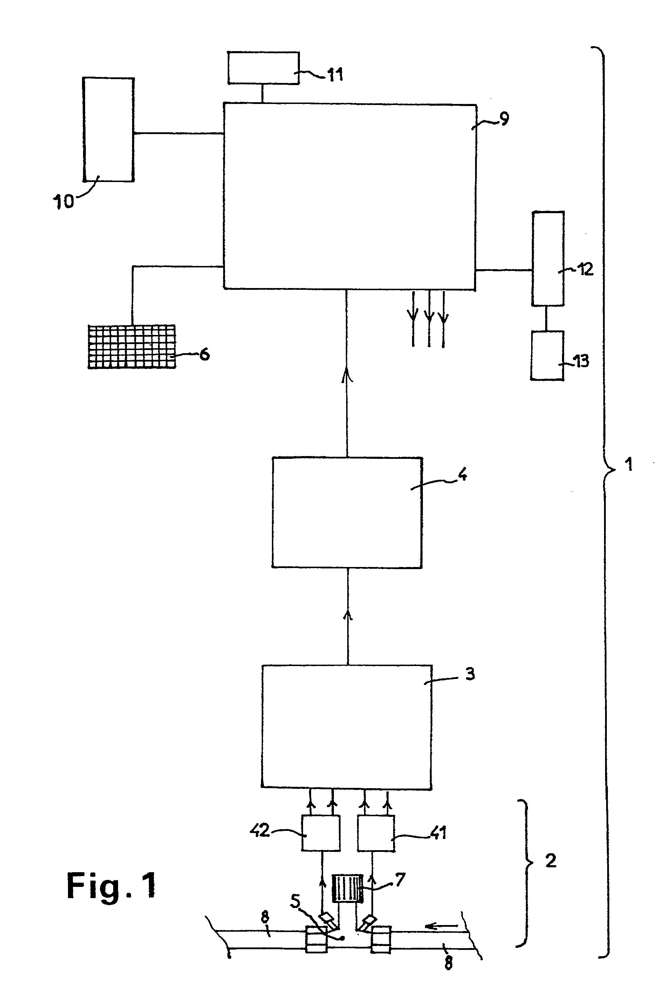

Le circuit 1, représenté à la figure 1, dont le fonctionnement permet la mise en oeuvre du procédé selon l'invention, est constitué d'un dispositif 5 de réglage du débit de fluide, monté sur la canalisation 8 d'alimentation en fluide, le dispositif 5 étant d'un type quelconque approprié tel qu'une vanne de régulation thermique. Au moyen de deux prises de pression, ce dispositif 5 est connecté à la partie hydraulique 2 du circuit 1 comprenant deux capteurs 41 et 42 permettant la connexion à un étage d'entrée 3 constituant une portion de la partie électronique du circuit 1. L'étage d'entrée 3 est connecté à un convertisseur analogique numérique 4, décrit ci-dessous. Le convertisseur analogique numérique 4 est connecté à un microcontrôleur 9, comprenant un chronomètre et une mémoire. Le microcontrôleur 9 est connecté respectivement à un clavier 6 comprenant des touches de commandes, un afficheur 10 permettant l'affichage de caractères, une mémoire 11 et une alimentation 12 branchée sur pile 13.

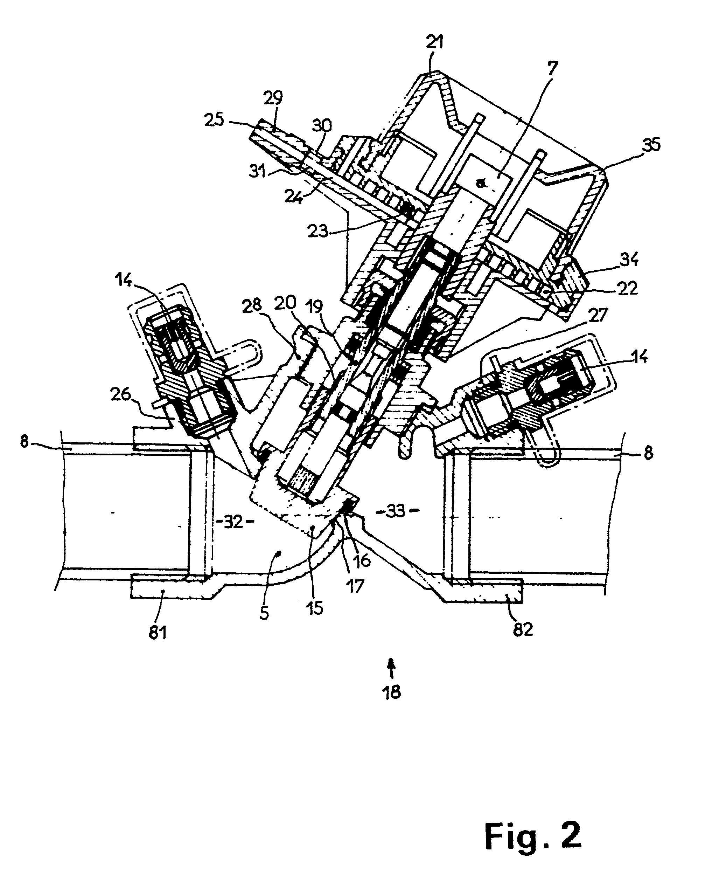

Comme le montre plus particulièrement la Fig. 2, la vanne 5 pour colonne de transport de fluide thermique comporte un corps tubulaire 18 comprenant cinq tubulures 26, 27, 28 ,81, 82 raccordées respectivement à deux prises de pression 14, à un volant 7 de réglage et au tronçon 8 de conduite de fluide pour régulation thermique.

Les tubulures 26 et 81 débouchent dans une chambre amont 32, les tubulures 27, 28 et 82 dans une chambre en aval 33 séparée de la précédente par une cloison présentant une ouverture qui offre un siège 16 à un clapet 15 qui vient fermer le robinet 5, en butée étanche sur le siège 16 ; la combinaison clapet 15 et siège 16 forme un organe déprimogène 17. Le clapet 15 est maintenu et guidé en translation par l'intermédiaire de l'extrémité filetée 20 du cylindre creux 19. Le cylindre 19 est lié en rotation à un volant 21 à poignée 35 cannelée et sensiblement cylindrique de réglage manuel de la hauteur du clapet 15. Au niveau du plan contenant un rebord circulaire 34 externe à la poignée 35, le volant 21 présente une rainure interne 22 en forme de spirale. Dans la rainure 22, un doigt 23 fixé à une languette graduée 24, est entraîné en translation suivant l'axe du logement 25 de la languette graduée 24 par la rotation de la rainure 22 du volant 21. Le volant 21 comporte à sa partie la plus près du corps 18, qui sera appelée ci-dessous face inférieure, une excroissance 29 qui contient une partie d'extrémité du logement 25 de la languette graduée 24, cette excroissance 29 est sensiblement plane et coplanaire avec la rainure 22. L'excroissance 29 présente deux jours 30 et 31 en vis-à-vis l'un avec l'autre, chacun des jours 30 et 31, formant une ouverture de la dimension de l'un des chiffres de dizaines gradués sur la languette 24, étant situés sur une des deux faces de l'excroissance 29. Les dizaines sont affichées et visibles sur la face supérieure et sur la face inférieure du volant 21. Les chiffres d'unités sont affichés sur le rebord 34 et sont tous visibles du côté extérieur à la canalisation et, un jour à la partie inférieure du volant 21 permet d'afficher un chiffre d'unité. Lesdits chiffres de dizaines et d'unités indiquent la position du clapet 15 par rapport au siège 16.

Les prises de pressions 14 sont identiques et sont connectées au corps 18 par une fixation à la tubulure 26 et à la tubulure 27 respectivement. Les prises de pression 14 et le volant de réglage 21 sont fixés du côté du corps 18 de la vanne 5, tourné en dehors du mur sur lequel est monté la canalisation d'alimentation en fluide 8.

En variante d'exécution, il est possible de monter un instrument de mesure de température sur la vanne 5.

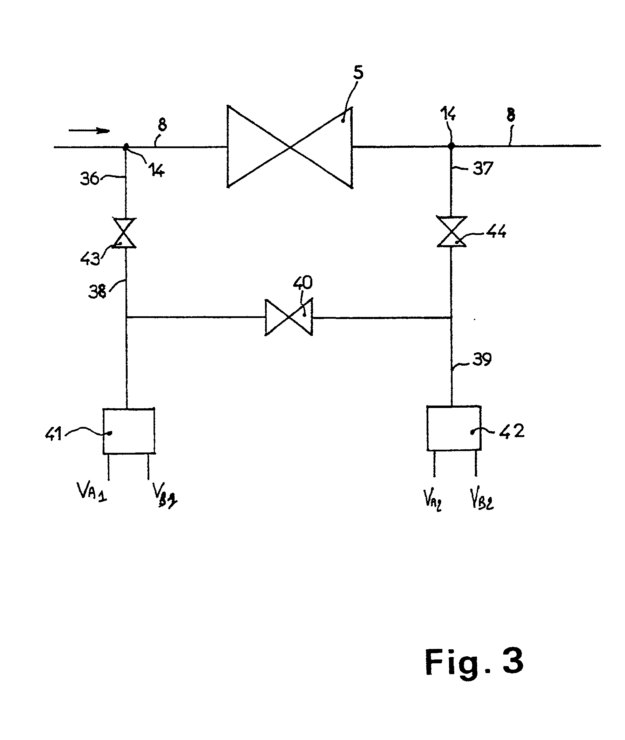

Dans la partie hydraulique du circuit permettant la mise en oeuvre du procédé selon l'invention décrit en regard de la figure 1, représenté à la Fig. 3, l'organe déprimogène du dispositif de régulation 5 est monté sur le tronçon de canalisation 8. Une canalisation 36 est raccordée à la partie amont par rapport à l'organe déprimogène de la canalisation 8 ; la canalisation 36 débouche sur une valve 43 connectée à une extrémité d'une canalisation 38, sensiblement en forme de T, dont les deux autres extrémités débouchent respectivement sur un capteur 41 et une vanne 40 connectée à son autre extrémité à une autre canalisation 39 en forme de T, dont les deux autres extrémités débouchent respectivement sur un capteur 42 et une vanne 44 connectée à son autre extrémité à une autre canalisation. Une canalisation 37 relie la vanne 44 à la prise de pression 14 fixée à la partie aval de la canalisation 8.

L'installation décrite est d'une grande simplicité, l'ensemble des éléments formé par les canalisations 36, 37, 38, 39 et les vannes 43, 40, et 44 constituant une canalisation montée en parallèle à la canalisation formée par l'ensemble des éléments formé par la canalisation 8 et le dispositif de régulation de fluide 5.

Les capteurs 41 et 42 transforment la pression hydraulique en tensions électriques transmises respectivement par les moyens de conductions électriques Va1, Vb1, Va2 et Vb2, à la partie électronique du circuit.

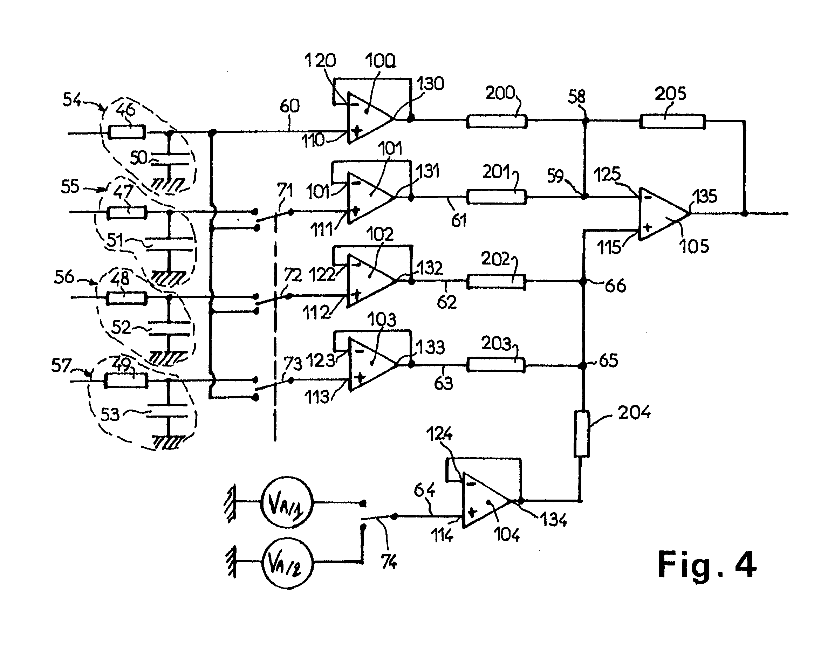

Comme le montre particulièrement la Fig. 4, l'étage d'entrée 3 comprend quatre filtres d'entrée 54, 55, 56 et 57 montés en parallèle respectivement connectés aux sorties Va1, Vb1, Va2 et Vb2 des capteurs.

Les filtres d'entrée 54, 55, 56 et 57 sont formés respectivement par le montage en série d'une résistance 46, 47, 48 ou 49 et d'un condensateur 50, 51, 52 ou 53.

Le filtre 54 est connecté à quatre portions de circuit formant voies 60, 61, 62 et 63 montées en parallèle, la voie 60 étant formée par le montage en série d'un amplificateur adaptateur d'impédance 100 et d'une résistance d'entrée 200, la voie 61 étant constituée du montage en série d'un commutateur analogique 71 à deux positions de contact, d'un amplificateur adaptateur d'impédance 101 et d'une résistance d'entrée 201, la voie 62 de circuit étant formée par le montage en série d'un interrupteur analogique 72 à deux positions de contact, d'un amplificateur adaptateur d'impédance 102 et d'une résistance d'entrée 202, la voie 63 étant formée par le montage en série d'un interrupteur analogique 73 à deux positions de contact, d'un amplificateur adaptateur d'impédance 103 et d'une résistance d'entrée 203.

Les entrée alimentant en tensions Va1 et Va2 sont connectées à la voie 64, formée par le montage en série d'un commutateur analogique 74 à deux positions de contact permettant la sélection des tensions, d'un amplificateur adaptateur d'impédance 104 et d'une résistance d'entrée 204.

Chaque amplificateur 100, 101, 102, 103 et 104, étant un amplificateur opérationnel, reçoit la tension en provenance des capteurs, au niveau de son entrée positive 110, 111, 112, 113 et 114 ; les entrées négatives 120, 121, 122, 123 et 124 des amplificateur 100, 101, 102, 103 et 104 étant respectivement connectées aux sorties 130, 131, 132, 133 et 134 des amplificateur 100, 101, 102, 103 et 104.

L'extrémité de sortie de la portion de circuit 60 est connectée par l'intermédiaire d'un noeud 58 à une résistance 205 et à un noeud 59 qui forme la connexion avec l'extrémité de la portion de circuit 61 et l'entrée négative d'un amplificateur 105. L'amplificateur 105, les deux résistances de contre-réaction 204 et 205 et les quatre résistances d'entrées 200, 201, 202 et 203 constituent un amplificateur de différence.

Les résistances d'entrées 200, 201, 202 et 203 étant identiques entres elles et les résistances 204 et 205 étant identiques entre elles, le rapport des résistances 204 et 205 sur les résistances d'entrées 200, 201, 202 et 203 est égal au gain.

L'extrémité de sortie de la voie 63 est connectée par l'intermédiaire du noeud 65 à la voie 64 et au noeud 66 qui forme la connexion avec l'extrémité de sortie de la voie 62 et l'entrée positive 115 de l'amplificateur 105.

Les filtres 55, 56 et 57 sont connectés respectivement à l'extrémité d'entrée des voies 61, 62 et 63.

Les sorties de la résistance 205 et de l'amplificateur 105 sont connectées ensembles et forment la sortie de l'étage d'entrée.

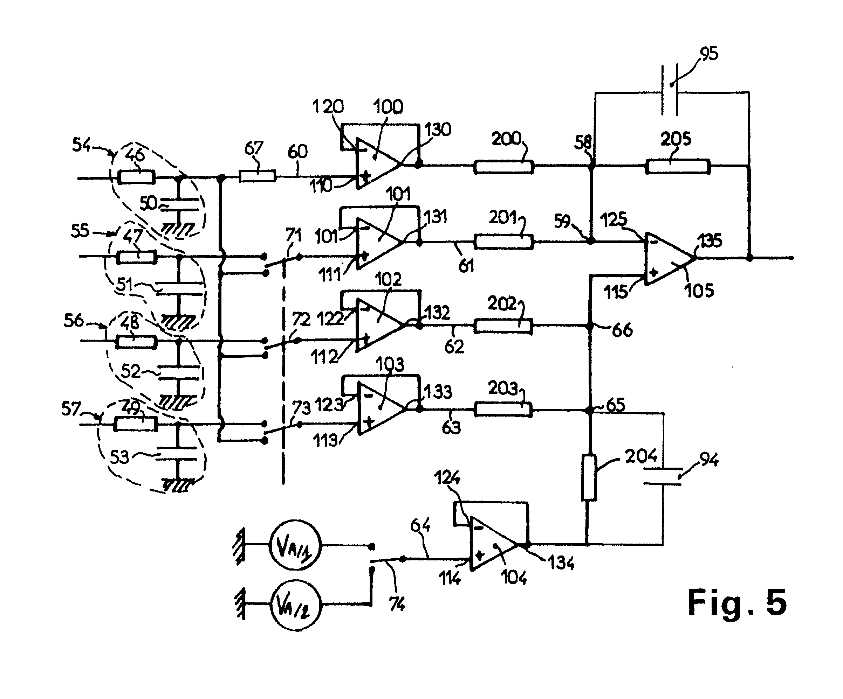

La Fig. 5 représente une variante d'un étage d'entrée identique à la Fig. 4, les éléments du circuit étant repérés par les mêmes références numériques que celles désignant les éléments correspondants du circuit de la Fig. 4.

Cet étage d'entrée diffère de celui représenté à la Fig. 4 en ce que la voie 60 comporte à son entrée une résistance 67 montée en série avec l'amplificateur 100 et la résistance 200, et en ce qu'il comprend deux condensateurs 94 et 95 montés respectivement en parallèle des deux résistances de contre-réaction 204 et 205.

La résistance 67 est égale à la résistance interne de chacun des commutateurs analogiques 71, 72 et 73 à deux positions de contact, en position fermée, possédant chacun une résistance interne identique de manière à équilibrer chacune des quatres voies 60, 61, 62 et 63.

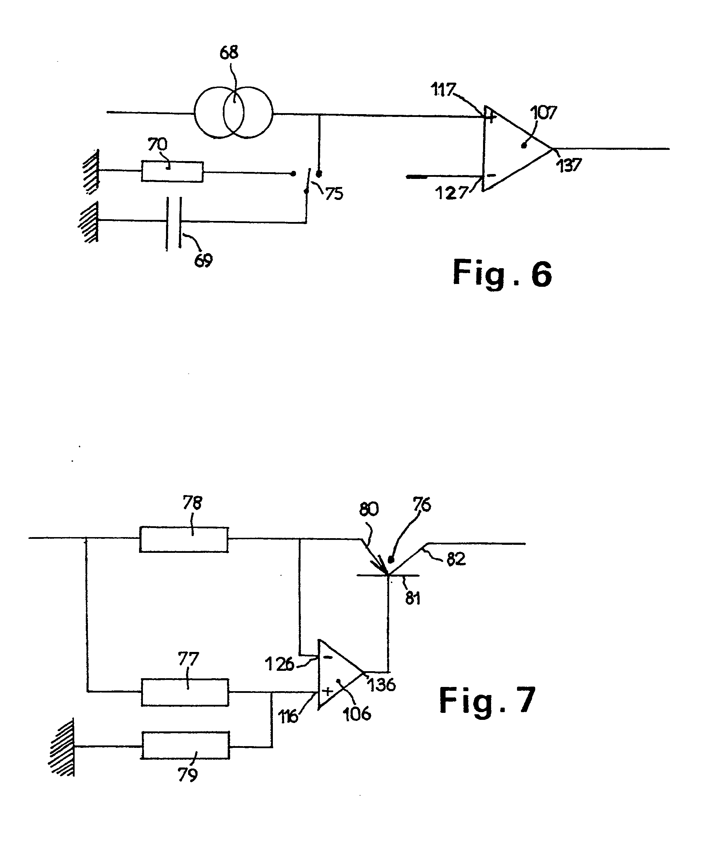

Le convertisseur analogique numérique représenté à la Fig. 6 comprend un amplificateur 107 utilisé en comparateur.

L'entrée négative 127 de l'amplificateur 107 étant connectée à la sortie de l'étage d'entrée, l'entrée positive de l'amplificateur 107 est connectée à un noeud assurant le contact électrique avec un générateur à courant constant 68 et un commutateur analogique 75 à deux positions de contact, permettant un contact électrique du générateur 68 et de l'entrée positive 117 de l'amplificateur 107, soit avec une résistance de décharge 70 soit un condensateur 69 ; la combinaison du générateur 68 et du condensateur 69 formant un générateur de rampe.

La sortie 137 de l'amplificateur 107 correspond à la sortie du convertisseur.

La combinaison des éléments du convertisseur ne constituant pas le générateur, forme un comparateur de manière à ce que le convertisseur soit composé d'un générateur de rampe associé à un comparateur.

La Fig. 7 représente un exemple de réalisation de générateur de courant du convertisseur représenté à la Fig. 5 comprenant une résistance 79 connectée par l'intermédiaire d'un noeud à une résistance 77 et à l'entrée positive 116 d'un amplificateur 106 dont l'entrée négative est connectée à la sortie d'une résistance 78, l'entrée de cette dernière étant connectée à la sortie de la résistance 77.

La sortie de la résistance 78 et l'entrée négative 126 de l'amplificateur 106 sont connectées à l'émetteur 80 d'un transistor 76, la base 81 du transistor 76 étant connectée à la sortie 136 de l'amplificateur 106.

Le collecteur 82 du transistor 76 correspond à la sortie du générateur.

Le fonctionnement de l'installation ainsi décrite est le suivant :

Préalablement à l'acquisition de la différence entre la pression amont et la pression aval, l'organe déprimogène 17 du dispositif de régulation 5 et la vanne 44 de communication avec la pression aval fermée, les vannes 43 et 40 ouvertes, les capteurs 42 et 41 reçoivent la pression amont au dispositif de régulation 5. La pression de fluide arrivant aux capteurs 42 et 41 étant identique, cela permet de régler les capteurs 42 et 41 de manière telle que les sorties Va1, Vb1 et Va2, Vb2 présentent des caractéristiques électriques identiques et permet d'éliminer les tensions parasites dues aux capteurs, ce qui constitue l'étape de compensation des décalages à l'origine pour les capteurs.

Le circuit comprenant deux capteurs 41 et 42 captant deux pressions différentes, la pression amont et la pression aval, chacun des capteurs transforme la pression qu'il reçoit en deux tensions représentatives de la pression Va1, Va2, Vb1 et Vb2. Ces quatre tensions arrivent dans l'étage d'entrée en traversant chacune un filtre.

L'étage d'entrée 3 reçoit dans chaque voie 60, 61, 62 et 63 les tensions Va1, Vb1, Va2 et Vb2 provenant des capteurs 6 ; les 4 filtres d'entrée 54, 55, 56 et 57 éliminent toutes les petites variations qui n'ont rien à voir avec l'information utile connue en soi.

L'étage d'entrée permet de modifier les tensions de manière à ce qu'elles correspondent à la différence de la pression amont et de la pression aval.

Ce circuit 1 permet de mesurer la différence de pression quel que soit le sens d'écoulement du fluide dans la canalisation 8, en conséquence le dispositif de mesure décrit ci-dessus est réversible.

Le dispositif de mesure affiche la différence de débit en effectuant la soustraction de la tension Vb1 de la tension Va1 fournie par le capteur 41, ce qui produit une tension V1 et en soustrayant la tension Vb2 de la tension Va2 ce qui produit une tension V2, puis en soustrayant respectivement la tension V2 du capteur 42 de la tension V1 du capteur 41 ce qui produit une tension proportionnelle à la différence de débit réelle du fluide circulant dans la canalisation 8. Dans la partie électronique du circuit, la tension traversant les composants électroniques pleins de défauts mais ne coûtant pas cher, pour l'étage d'entrée 3 , ces composants électroniques au nombre de six amplificateurs 100, 101, 102, 103, 104 et 105 et de six résistances 200, 201, 202, 203, 204 et 205, produisent six tensions de décalages se superposant à la tension utile. Les six tensions de décalages sont des tensions parasites. Il faut encore ajouter aux composants de l'étage d'entrée 3 les composants du convertisseur qui provoquent également des tensions parasites et un gain qui se traduisent par une amplification de la tension dans le circuit. L'amplification de la tension permet d'effectuer plus facilement des mesures.

Après l'étage d'entrée 3, la tension correspondant à la différence de pression, passe dans le convertisseur 4. La tension issue du générateur de rampe, formé par la combinaison du générateur 68 et du condensateur 69, augmente proportionnellement au temps. Cette augmentation constante est fonction des composants électroniques. Avant chaque mesure de la différence de pression, d'étalonnage de l'étage d'entrée 3 et du convertisseur 4, la programmation de la mémoire 11 permet au microcontrôleur de commander l'étape de compensation des décalages à l'origine des capteurs d'entrée. Les tensions de décalages des amplificateurs opérationnels étant invariantes entre deux mesures, on réalise deux mesures successives préalables de la différence de pression par l'envoi d'une tension étalon connue parce que programmée.

Ces tensions étalons étant connues et différentes pour chaque mesure, elles permettent de déterminer le mode commun, tension commune aux quatre voies 60, 61, 62 et 63, et le gain, puis l'étalonnage de la chaîne formée par l'étage d'entrée 3 et le convertisseur 4.

La tension issue du générateur de rampe augmente de façon proportionnelle au temps écoulé, l'étalonnage a permis de déterminer le coefficient de proportionnalité de la tension par rapport au temps.

L'actionnement du commutateur analogique 75 permet d'initialiser la tension.

Le microcontrôleur 9 commande la fermeture du commutateur 75 ce qui initialise la tension. Quand le microcontrôleur 9 commande l'ouverture du commutateur cela entraîne l'alimentation en tension par le générateur de rampe, cette tension croît proportionnellement au temps. Le chronomètre du microcontrôleur est déclenché en même temps que l'ouverture du commutateur 75.

Au moment où la tension fournie par le générateur de rampe est égale à la tension proportionnelle au débit de fluide fournie par les capteurs 41 et 42 par l'intermédiaire du circuit, le comparateur donne le signal au microcontrôleur 9 qui arrête le chronomètre et affiche le temps écoulé depuis l'initialisation sous forme d'un nombre. Ce nombre affiché est égal à la différence de pression réelle de fluide circulant dans la canalisation 8 au niveau de la vanne 5.

L'opérateur règle la position de l'organe déprimogène en utilisant cet affichage de la différence de pression et les graduations en dizaines et unités de la vanne 5.

Mesure du débit de fluide de régulation thermique, réalisée au moyen d'un circuit transformant la pression en tension électrique proportionnelle au débit, transformant ladite tension électrique proportionnelle au débit en temps proportionnel à la tension électrique donc proportionnelle au débit et affichant un nombre correspondant au temps et au débit.

Le circuit comporte un dispositif de réglage du débit 5 comprenant au moins deux prises de pression 14 connectées chacune à au moins un transducteur 41, 42 connecté à un étage d'entrée 3 lui-même connecté à un convertisseur analogique numérique 4, un clavier de commande 6, un afficheur 10 permettant d'afficher successivement le débit puis le réglage à effectuer, une mémoire 11 et un microcontrôleur 9 comprenant une autre mémoire permettant de gérer toutes les acquisitions et au moins une alimentation électrique 10.

Application au réglage du débit dans des conduites transportant un fluide de régulation thermique, notamment des colonnes d'eau de chauffage central.

Le circuit se caractérise en ce qu'il est équipé de l'ensemble des composants de mesure mettant en oeuvre le procédé selon la revendication 1.

L'utilisation de l'afficheur selon l'invention permet le dialogue entre le circuit et l'opérateur.

Le circuit permettant de mettre en oeuvre le procédé, selon l'invention, pour la mesure et le réglage du débit des colonnes d'eau de chauffage central est caractérisé en ce qu'il est réalisé au moyen d'un circuit comprenant au moins un robinet de pied de colonne comportant au moins deux prises de pression connectées chacune à au moins un capteur transformant la mesure de pression en tensions électriques transmises à des composants électroniques, et en ce que ce procédé comporte les étapes successives suivantes :

- introduction par un clavier du diamètre nominal de la vanne,
- validation de ce diamètre,
- introduction la position n° 1 de la vanne,
- validation,
- calcul du débit à une première position,
- introduction la position n° 2 de la vanne,
- validation,
- calcul du débit à une deuxième position
- calcul en fonction des deux débits de la hauteur manométrique de la pompe et saisie du débit souhaité
- affichage de la position dans laquelle doit se trouver le clapet pour obtenir le débit souhaité.

## Revendications

1.- Procédé pour la mesure en vue du réglage du débit de conduites transportant un fluide de régulation thermique, notamment des colonnes d'eau de chauffage central, caractérisé en ce qu'il est réalisé au moyen d'un circuit comprenant au moins un dispositif de réglage du débit (5) comportant au moins deux prises de pression (14) connectées chacune à au moins un transducteur (41, 42) connecté à un étage d'entrée

(3) lui-même connecté à un convertisseur analogique numérique (4), et en ce que ce procédé comporte les étapes suivantes :

– une compensation des dérives des étages d'entrée (3),

– un étalonnage du convertisseur analogique numérique (4),

– une mesure des décalages à l'origine provoqués par les capteurs (41, 42) connectés aux prises de pression (14), et,

– une mesure de la différence de pression.

**2.-** Procédé selon la revendication 1 caractérisé en ce que l'étape de compensation des dérives de l'étage d'entrée (3) est provoquée automatiquement par le programme contenu dans une mémoire (11) au moment de la commande de chaque mesure de la compensation des décalages à l'origine.

**3.-** Procédé selon la revendication 1 ou 2 caractérisé en ce qu'il comprend une étape de transformation de la mesure de pression en tensions électriques transmises à des composants électroniques.

**4.-** Procédé selon la revendication 1, 2 ou 3 caractérisé en ce que les étapes suivantes :

– compensation des dérives des étages d'entrée (3),

– étalonnage du convertisseur analogique numérique (4),

– mesure des décalages à l'origine provoqués par les capteurs (41, 42) connectés aux prises de pression (14),

– mesure de la différence de pression,

soient obtenues par la correction de la tension du décalage d'entrée et des dérives provoquées par des amplificateurs opérationnels et du réétalonnage à chaque mesure de la chaîne de conversion analogique numérique des mesures formées par la combinaison de l'étage d'entrée (3) et du convertisseur (4), commandée par un microcontrôleur (9) au moyen d'une programmation appropriée de la mémoire (11).

**5.-** Dispositif pour la mise en oeuvre du procédé selon l'une des revendications 1 ou 2 caractérisé en ce qu'il est constitué par un circuit comprenant un moyen de réglage du débit (5), des capteurs (41, 42), un étage d'entrée (3), un convertisseur (4), au moins un clavier de commande (6), au moins un afficheur (10) permettant d'afficher successivement le débit puis le réglage à effectuer, au moins une mémoire (11) et un microcontrôleur (9) permettant de gérer toutes les acquisitions et au moins une alimentation électrique (12).

**6.-** Dispositif selon la revendication 5 caractérisé en ce que les capteurs sont des transducteurs (41, 42) transformant la mesure de pression en courants électriques transmis à des composants électroniques.

**7.-** Dispositif selon la revendication 5 caractérisé en ce que sa mémoire (11) est programmée et apte à provoquer automatiquement l'étape d'étalonnage du convertisseur analogique numérique (4) avant la mise en oeuvre de l'étape de mesure de pression, au moment de la commande de cette dernière étape.

**8.-** Dispositif selon la revendication 5 caractérisé en ce que son étage d'entrée (3) comprend au moins quatre filtres d'entrées (54, 55, 56, 57), au moins quatre résistances d'entrée (200, 201, 202, 203) identiques, au moins six amplificateurs (100, 101, 102, 103, 104, 105) et au moins deux résistances de contre-réaction (204, 205).

**9.-** Dispositif selon la revendication précédente caractérisé en ce que son étage d'entrée (3) comporte trois commutateurs analogiques (71, 72, 73) aptes à être actionnés simultanément.

**10.-** Dispositif selon la revendication 9 caractérisé en ce qu'il comporte des commutateurs analogiques (71, 72, 73, 74, 75) commandés par ledit microcontrôleur (9).

**11.-** Dispositif selon la revendication 3 caractérisé en ce qu'il comporte un dispositif de mesure de la température.

**12.-** Dispositif selon la revendication 3 caractérisé en ce qu'il comprend un dispositif de relevé automatique de la position du clapet (15) par rapport à son siège (16).

**13.-** Dispositif caractérisé en ce qu'il est équipé de l'ensemble des composants de mesure mettant en oeuvre le procédé selon la revendication 1.

**14.-** Dispositif selon la revendication 5 caractérisé en ce qu'il comprend un afficheur (10) apte à assurer le dialogue entre le circuit et l'utilisateur.

**15.-** Application du dispositif selon l'une des revendications 5 à 10, pour le réglage du débit, au moyen d'au moins un clapet et un siège formant organe déprimogène, caractérisée en ce que ce dernier est une vanne d'équilibrage (5), qui comprend au moins deux prises de pression (14), au moins un système de commande du clapet (15) et au moins un indicateur de la position relative du clapet (15) par rapport à son siège (16).

**16.-** Application du dispositif à une vanne d'équilibrage selon la revendication 15, comportant des prises de pression et un indicateur de la position relative du clapet par rapport à son siège dans le même plan, caractérisée en ce que lesdites prises de pression (14) reliées au circuit de mesure du débit sont situées respectivement en amont et en aval du dispositif de l'organe déprimogène (17).

**17.-** Application du dispositif au réglage du débit selon la revendication précédente caractérisée en ce que l'indicateur de la position relative du clapet (15) par rapport à son siège (16) est manuel.

**18.-** Application du dispositif au réglage du débit selon la revendication 15, caractérisée en ce que l'indicateur de la position relative du clapet (15) par rapport à son siège (16) est un répétiteur électronique.

**19.-** Application du dispositif au réglage du débit selon la revendication 15 caractérisée en ce que l'indicateur de la position relative du clapet (15) par rapport à son siège (16) constitue un seul organe.

20.- Application du dispositif selon la revendication précédente caractérisée en ce que l'indicateur de la position relative du clapet (15) par rapport à son siège (16) constitue un volant (21) de réglage manuel comprenant un mécanisme qui incrémente les dizaines qui sont affichées par le volant (21) de réglage visibles au-dessus et au dessous de ce dernier et en ce que les chiffres des unités sont affichés visibles au-dessus et au-dessous dudit volant (21) de réglage.

21.- Application du dispositif selon l'une quelconque des revendications 15 ou 16 caractérisée en ce que les deux prises de pression (14) sont de formes et de dimensions identiques.

22.- Dispositif en vue de la mesure et du réglage du débit de conduites transportant un fluide de régulation thermique comprenant un circuit dans lequel sont connectés des composants électroniques caractérisé en ce qu'il comprend au moins une caractéristique de l'une quelconque des revendications 5 à 21.

**Fig. 1**

Fig. 2

**Fig. 3**

Fig. 4

Fig. 5

EP 0 461 057 A1

Fig. 6

Fig. 7

Office européen
des brevets

## RAPPORT DE RECHERCHE EUROPEENNE

Numero de la demande

EP 91 47 0011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 569 221 (SNOOK, Jr.) <br> * Colonne 4, ligne 56 - colonne 5, ligne 35 * <br> --- | 1,3-6 | G 01 F 1/50 <br> G 01 F 1/36 <br> G 01 F 25/00 |
| A | EP-A-0 335 040 (GINN LEROY DRY) <br> * Colonne 13, lignes 31-55; figure 1 * <br><br> --- | 1,3,5,6 ,11-13, 15,16, 22 | |
| A | EP-A-0 057 938 (LINDE AG) <br> * Page 7, ligne 11 - page 12, ligne 2; figure * <br> --- | 1-7 | |
| D,A | FR-A-2 211 108 (PONT-A-MOUSSON S.A.) <br> ----- | | |

DOMAINES TECHNIQUES RECHERCHES (Int. Cl.5)

G 01 F

Le présent rapport a été établi pour toutes les revendications

| Lieu de la recherche | Date d'achèvement de la recherche | Examinateur |
|---|---|---|
| LA HAYE | 10-09-1991 | ROSE A.R.P. |